# EUROPÄISCHE PATENTSCHRIFT

(11) **EP 0 622 108 B1**
(45) Veröffentlichungstag und Bekanntmachung des Hinweises auf die Patenterteilung: **07.05.1997**
(21) Anmeldenummer: 94200668.5
(22) Anmeldetag: 16.03.1994
(51) Int. Cl.: B01D 53/56, B01J 27/053, C04B 7/36

(54) **Verfahren zur Entstickung der bei der Herstellung von Zement anfallenden Abgase**
Process for removing nitrogen oxides from exhaust gases resulting from the manufacture of cement
Procédé d'élimination d'oxydes d'azote des gas d'échappement provenant de la fabrication de ciment

(30) Priorität: 24.04.1993 DE 4313479
(43) Veröffentlichungstag der Anmeldung: 02.11.1994
(73) Patentinhaber: METALLGESELLSCHAFT AKTIENGESELLSCHAFT, 60323 Frankfurt am Main (DE)
(72) Erfinder: Eschenburg, Joachim, D-61381 Friedrichsdorf (DE); Beisswenger, Hans, D-65812 Bad Soden (DE)

(56) Entgegenhaltungen:
- EP-A- 0 525 847
- DE-A- 3 542 145
- FR-A- 2 318 835
- DATABASE WPI Section Ch, Week 7744, Derwent Publications Ltd., London, GB; Class E31, AN 77-78169Y & JP-A-52 073 171 (NIPPON STEEL CHEM. K.K.) 16. Dezember 1975

## Beschreibung

Die Erfindung bezieht sich auf ein Verfahren zur Entstickung der bei der Herstellung von Zement anfallenden Abgase.

Zement ist ein anorganisches nichtmetallisches Pulver, das mit Wasser gemischt wird, nach dem Mischen selbständig erhärtet und nach dem Erhärten dauerhaft fest bleibt. Man unterscheidet zwischen den sog. Normzementen Portlandzement, Eisenportlandzement, Hochofenzement und Traßzement. Die in der Bundesrepbublik Deutschland hergestellten Normzemente haben folgende chemische Zusammensetzung:

CaO 41 bis 67 Gew.%, SiO₂ 18 bis 33 Gew.%, Al₂O₃ 3 bis 14 Gew.%, Fe₂O₃ 0,5 bis 4,5 Gew.%, MnO 0 bis 0,6 Gew.%, MgO 0,5 bis 9 Gew.%, SO₃ 1 bis 4,5 Gew.%.

Die Herstellung des Zements umfaßt das Gewinnen und Aufbereiten der Rohstoffe, das Brennen des Rohstoffgemisches zu Zementklinker, das Herstellen der Zumahlstoffe sowie das gemeinsame Vermahlen des Klinkers und ggf. eines oder mehrerer Zumahlstoffe mit Calciumsulfat als Erstarrungsregler. Die Rohstoffe (Kalkstein und Ton) werden trocken aufgemahlen und liefern das Rohmehl. Das Rohmehl wird während des Mahlvorgangs durch ein heißes Gas getrocknet, danach aufgewärmt und anschließend zu Zementklinker gebrannt. Je nach Bauart des Brennofens wird das Rohmehl während ca. 1 bis 5 Stunden auf die Brenntemperatur von maximal 1450 bis 1500°C aufgewärmt und verbleibt etwa 10 bis 20 Minuten bei dieser Temperatur. Anschließend wird der Zementklinker möglichst schnell abgekühlt. Beim Erhitzen des Rohmehls, das noch eine Restfeuchte von 8 bis 12 Gew.% aufweisen kann, wird zunächst bis etwa 100°C das anhaftende Wasser und bis etwa 600°C das im Ton adsorptiv und chemisch gebundene Wasser entfernt. Die Zersetzung des Calciumkarbonats beginnt in Gegenwart von SiO₂, Al₂O₃ und Fe₂O₃ schon bei 550 bis 600°C und verläuft oberhalb 900°C sehr schnell. Das Brenngut verliert während des Brennens ca. 35 Gew.% seines Trockengewichts. In der Bundesrepublik Deutschland werden ca. 97 % des Zementklinkers in Drehrohröfen gebrannt, die unter 3 bis 4° geneigt sind. Infolge Neigung und Drehung des Ofens läuft das am oberen Ende aufgegebene vorgewärmte Rohmehl einer Kohlenstaub-, Öl- oder Gasflamme entgegen, die am unteren Ende des Ofens brennt. Im Bereich der Flamme mit Gastemperaturen von 1800 bis 2000°C werden Brennguttemperaturen von 1350 bis 1500°C erreicht, die für die Klinkerbildung erforderlich sind. Nach dem Brennen verläßt der Klinker den Drehrohrofen und fällt in einen Kühler, der als Kühlmedium mit Luft arbeitet und in dem der Klinker bis zu einer Temperatur von 800 bis 900°C gekühlt wird. Die zur Kühlung des Zementklinkers verwendete Luft wird dem Drehrohrofen als Verbrennungsluft zugeführt. Die Vorwärmung des Rohmehls erfolgt entweder im Drehrohrofen selbst oder aber in einem separaten Vorwärmer, der vorzugsweise als aus mehreren Zyklonen bestehende Apparatur gestaltet ist. Die heißen Abgase des Drehrohrofens durchströmen den Zyklonvorwärmer von unten nach oben, und das trockene Rohmehl wird den Abgasen vor der obersten Zyklonstufe zugegeben, in den einzelnen Zyklonen wieder aus dem Gas abgeschieden und vor der nächsten Zyklonstufe erneut im Gasstrom suspendiert. Das Rohmehl wird im Vorwärmer in der Regel auf eine Temperatur von ca. 800°C vorgewärmt, während das Abgas nach dem Verlassen der obersten Zyklonstufe noch Temperaturen von 300 bis 400°C aufweist. Im Zyklonvorwärmer kann bereits eine teilweise Calcinierung des Rohmehls erfolgen. Zum Herstellen von Zement wird der Zementklinker allein oder mit den Zumahlstoffen Hüttensand, Traß, Ölschiefer oder Flugasche gemahlen. Dem Mahlgut wird außerdem Gips zum Regeln des Erstarrens zugesetzt.

Im Drehrohrofen bilden sich bei den hohen Temperaturen der Brennflamme in erheblicher Menge Oxide des Stickstoffs, vorzugsweise NO, die aus den Abgasen entfernt werden müssen, da sie als Umweltgifte wirken. In einigen Fällen enthalten die Abgase auch noch den gasförmigen Schadstoff SO₂, der ebenfalls zu entfernen ist.

Aus der DE-B-2 411 672 ist ein Verfahren zum Entfernen von Stickoxiden aus sauerstoffhaltigen Verbrennungsabgasen durch selektive Reduktion der Stickoxide mit NH₃ in Gegenwart oder Abwesenheit von H₂, CO und/oder Kohlenwasserstoffen bei Temperaturen von 705 bis 1095°C bekannt. Wird dieses Verfahren zur Entstickung von Abgasen verwendet, die bei der Herstellung von Zement entstehen, muß mit einem Überschuß an NH₃ gearbeitet werden, denn die Vermischung des NH₃ mit den Abgasen, die den Drehrohrofen verlassen, ist sehr schwierig, so daß eine vertretbare Entstickungsleistung von > 50 % nur dann erreicht wird, wenn das NH₃ im größeren Überschuß eingesetzt wird; bei einer Entstickungsleistung von ca. 80 % ist beispielsweise ein NOₓ-NH₃-Verhältnis von 1 : 3 erforderlich. Im Abgas findet sich daher immer ein erheblicher NH₃-Gehalt, der entweder aus dem gereinigten Abgas entfernt werden muß oder aber in die Atmosphäre gelangt.

Aus der FR-A 2 318 835 ist ein Verfahren zur Entfernung von Stickoxiden aus den Abgasen der Zementerzeugung bekannt, bei dem ein Reduktionsmittel in eine Reduktionszone eingebracht wird, die eine Temperatur von 800 bis 1100°C aufweist. Als Reduktionsmittel kann u.a. NH₃ verwendet werden. Beim bekannten Verfahren sollen überschüssige, brennbare Reduktionsmittel mit Luft verbrannt werden. Dieses nach dem Prinzip der Hochtemperaturreduktion arbeitende Verfahren hat die gleichen Nachteile, wie das aus der DE-B 2 411 672 bekannt Verfahren.

In der EP-A-0 525 847 wurde ein Verfahren zur Entstickung der bei der Herstellung von Zement anfallenden Abgase vorgeschlagen, bei dem die mit Rohmehl beladenen Abgase bei 300 bis 450°C mit NH₃ in Gegenwart eines Katalysators zur Reaktion gebracht werden, wobei das NH₃ dem Abgas in einem Molverhältnis NH₃ : NO = 0,7 : 1 bis 1,5 : 1 zugegeben wird und wobei als katalytisch aktive Substanz Eisensulfat oder eine Mischung aus Eisensulfat und Mangansulfat verwendet wird. Auch bei diesem Verfahren ist das entstickte Abgas dann mit einem gewissen NH₃-Gehalt verunreinigt, wenn das Verfahren mit einem NH₃-Überschuß betrieben wird.

Der Erfindung liegt die Aufgabe zugrunde, ein Verfahren zur Entstickung der bei der Herstellung von Zement anfallenden Abgase zu schaffen, das eine sehr weitgehende Entfernung der Stickoxide auch im Gegenwart von Rohmehlstaub zuläßt, das keine zu entsorgende Abfallprodukte liefert, das mit einfachen technischen Mitteln in den Zementherstellungsprozeß integriert werden kann, das betriebssicher sowie kostengünstig arbeitet und das insbesondere einen unerwünschten NH₃-Gehalt im Abgas - den sog. NH₃-Schlupf - zuverlässig vermeidet.

Die der Erfindung zugrundeliegende Aufgabe wird dadurch gelöst, daß dem Abgas nach Verlassen des Drehrohrofens bei einer Temperatur von 750 bis 950°C, vorzugsweise 800 bis 900°C, Ammoniak zugegeben wird, wobei das Mol-Verhältnis NOₓ : NH₃ = 1 : 0,8 bis 1 : 1 beträgt, und daß das Abgas bei einer Temperatur von 300 bis 450°C, vorzugsweise 350 bis 400°C, mit einem Katalysator in Kontakt gebracht wird, der als aktive Substanz Eisensulfat oder eine Mischung aus Eisensulfat und Mangansulfat enthält. In überraschender Weise hat sich gezeigt, daß mit dem erfindungsgemäßen Verfahren trotz der unterstöchiometrischen Fahrweise ein Entstickungsgrad von 75 bis 95 % erreicht werden kann und daß ein Ammoniakschlupf mit Sicherheit vermieden wird. Diese außerordentlich vorteilhafte Wirkung beruht auf der Tatsache, daß bei der nichtkatalytischen Hochtemperaturentstickung innerhalb des erfindungsgemäßen Temperaturbereichs praktisch keine Verbrennung des Ammoniaks mit dem im Abgas enthaltenen Sauerstoff erfolgt, so daß das nicht zur Hochtemperaturentstickung genutzte NH₃ noch für die katalytische Abgasentstickung zur Verfügung steht, die eine hohe Entstickungsleistung von 90 bis 95 % zuläßt, wodurch das aus der Hochtemperaturentstickung kommende Ammoniak nahezu quantitativ mit dem im Abgas noch vorhandenen NOₓ reagiert. Zur Durchführung der Hochtemperaturentstickung wird das NH₃ dem Abgasstrom zweckmäßig zwischen Drehrohrofen und dem untersten Zyklon des Vorwärmers zugegeben, denn dort herrscht in der Regel die bevorzugte Temperatur von 800 bis 900°C. Mit dem erfindungsgemäßen Verfahren wird ferner in vorteilhafter Weise erreicht, daß durch die Entstickungsreaktion keine zu entsorgenden Abfallprodukte entstehen und lediglich Stickstoff und Wasser gebildet werden, daß es mit technisch einfachen Mitteln innerhalb des Zementherstellungsprozesses durchgeführt werden kann und daß es betriebssicher sowie kostengünstig arbeitet, insbesondere auch deshalb, weil das verwendete NH₃ praktisch quantitativ für die Entstickung genutzt wird. Ein Grund für die nahezu quantitative Umsetzung des im Abgas vorhandenen Ammoniaks bei der katalysierten Reaktion mit den Stickoxiden wird darin gesehen, daß sich das Ammoniak im Abgas während des Weges von der nichtkatalytischen Hochtemperaturentstickung zur katalytischen Entstickung sehr gleichmäßig verteilt. In dem als katalytisch aktive Substanz verwendeten Eisensulfat kann das Eisen sowohl in zweiwertiger als auch in dreiwertiger Form vorliegen. Die katalytische Reduktion der Stickoxide wird durch die Gegenwart des Rohmehlstaubs nicht beeinträchtigt, so daß eine Entstaubung des Abgases vor der katalytischen Entstickung nicht erforderlich ist. Unter dem Begriff "Entstickung" wird die Entfernung der in den Abgasen enthaltenen Stickoxide NO und NO₂ verstanden.

Nach der Erfindung ist ferner vorgesehen, daß als Katalysator kristallines Eisensulfat oder eine Mischung aus kristallinem Eisensulfat und kristallinem Mangansulfat verwendet wird, wobei der Katalysator eine Teilchengröße von 50 bis 500 µm hat und im Abgasstrom vor dem obersten Zyklon des Vorwärmers verteilt wird. Die hierbei benötigte Menge an Eisensulfat bzw. Mangansulfat ist so gering, daß diese Stoffe im Zementrohmehl verbleiben können, ohne daß es zu Störungen der Zementqualität kommt, zumal eine bestimmte Menge Eisenoxid im Zementklinker vorhanden sein muß. Als "oberster Zyklon" wird der Zyklon des Vorwärmers bezeichnet, hinter dem das Abgas den Vorwärmer verläßt.

In weiterer Ausgestaltung der Erfindung ist vorgesehen, daß der Katalysator dem Abgas in einer Menge von 0,1 bis 3 g/Nm³ zugegeben wird. Die vergleichsweise geringe Katalysatormenge kann mit Zementrohmehl oder Calciumsulfat mit dem Ziel der besseren Dosierbarkeit verdünnt werden.

In weiterer Ausgestaltung der Erfindung ist ferner vorgesehen, daß Eisensulfat und Mangansulfat (berechnet als FeSO₄ und MnSO₄) im Gewichtsverhältnis 3 : 1 bis 5 : 1 gemischt sind. Hierdurch wird die Leistungsfähigkeit des Katalysators innerhalb eines relativ großen Temperaturfensters auf einem sehr hohen Niveau gehalten, wobei es durch das im Abgas enthaltene Rohmehl nicht zu nachteiligen Einflüssen auf die Leistungsfähigkeit des Katalysators kommt.

Gemäß einer Alternative der Erfindung ist vorgesehen, daß der Katalysator in einer Wirbelschicht mit dem Abgas in Kontakt gebracht wird, daß die Wirbelschicht den obersten Zyklon des Vorwärmers ersetzt und daß die katalytisch aktive Substanz des Katalyators auf einen Träger aufgebracht ist, wobei der Träger einen Teilchendurchmesser von 0,5 bis 5 mm hat und aus SiO₂, Al₂O₃ oder Alumosilikaten besteht. Der Ersatz des obersten Zyklons des Vorwärmers durch eine Wirbelschicht, die aus einem Reaktor, einem Abscheider und einer Feststoffleitung besteht, gestattet die Verwendung eines Katalysators, dessen Teilchen einen Durchmesser von 0,5 bis 5 mm haben und der - bis auf den Katalysatorabrieb - im Wirbelschichtreaktor verbleibt, während das Zementrohmehl und der Katalysatorabrieb in die weiteren Zyklone des Vorwärmers transportiert werden. Das Aufbringen der katalytisch aktiven Substanz auf den Träger kann z.B. durch Imprägnieren der Trägerteilchen mit wäßrigen Lösungen von Salzen sowie anschließendes Trocknen und/oder Calcinieren der imprägnierten Teilchen erfolgen. Der Träger des Katalysators ist mit 5 bis 20 Gew.% der katalytisch aktiven Substanz dotiert. Die Qualität des Klinkers wird durch den Katalysatorabrieb nicht nachteilig beeinflußt.

Für den Fall, daß das Abgas bei 300 bis 450°C noch freies SO₂ enthält, ist nach der Erfindung vorgesehen, daß dem Abgas vor dem Eintritt in den obersten Zyklon des Vorwärmers oder in die Wirbelschicht des Vorwärmers teilweise calciniertes Rohmehl zugeführt wird. Das teilweise calcinierte Zementrohmehl enthält einen großen Anteil an freiem CaO und ist daher zur Bindung des im Abgas eventuell noch vorhandenen SO₂ bei 300 bis 450°C geeignet. Das zur Entschwefelung des Abgases verwendete, teilweise calcinierte Zementrohmehl wird dem untersten Zyklon des Vorwärmers entnommen, in dem bereits eine Vorcalcinierung des Rohmehls stattfindet; der Hauptstrom des teilweise calcinierten Zementrohmehls fließt in den Drehrohrofen. Als "unterster Zyklon" wird der Zyklon des Vorwärmers bezeichnet, der dem Drehrohrofen unmittelbar nachgeschaltet ist.

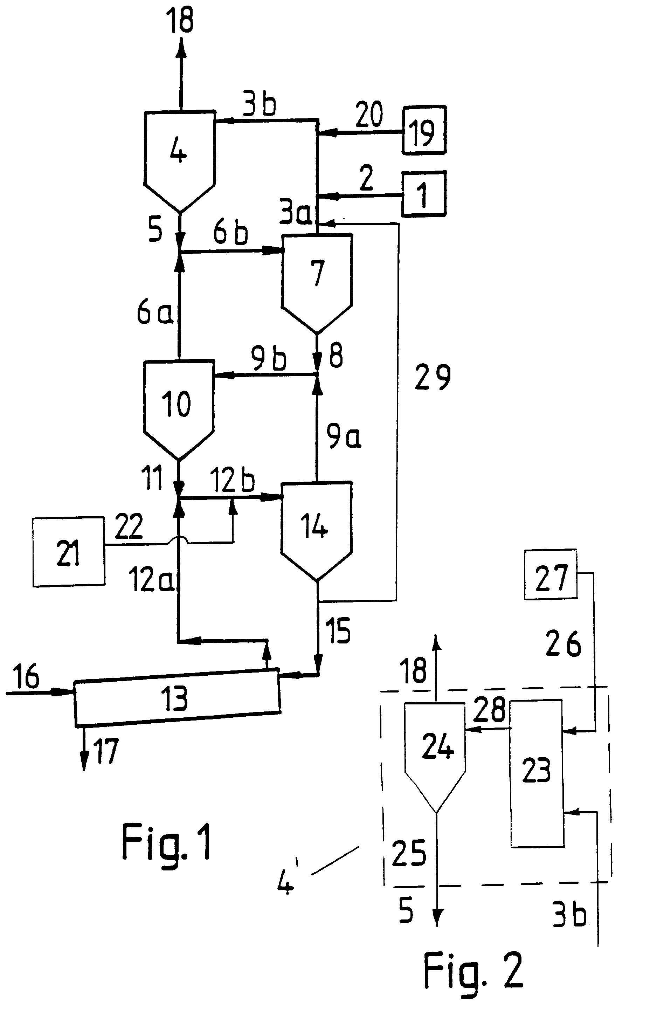

Der Gegenstand der Erfindung wird nachfolgend anhand der Zeichnung, die aus den Figuren 1 und 2 besteht, näher erläutert.

In Figur 1 ist ein Verfahrensfließbild des erfindungsgemäßen Verfahrens dargestellt. Aus der Mahlanlage (1), zu der auch eine Homogenisierungs- und eine Trocknungseinrichtung gehören, wird das Zementrohmehl über die Leitung (2) in die Leitung (3a) des Vorwärmers eingebracht. Das Rohmehl wird im Abgasstrom suspendiert, der in der Leitung (3a) fließt, und gelangt über die Leitung (3b) in den Zyklon (4), wo eine Abtrennung der Feststoffpartikel erfolgt. Die Feststoffpartikel gelangen über die Leitung (5) in die Leitung (6a), wo sie erneut im Abgasstrom suspendiert werden, der in der Leitung (6a) fließt. Die Suspension gelangt dann über die Leitung (6b) in den Zyklon (7), wo eine abermalige Abtrennung der Feststoffteilchen erfolgt, die über die Leitung (8) in die Leitung (9a) gelangen, wo sie erneut im Abgasstrom suspendiert werden. Das Abgas aus dem Zyklon (7) gelangt in die Leitung (3a). Aus der Leitung (9a) tritt die Feststoffsuspension über die Leitung (9b) in den Zyklon (10) ein, wo sie in ihre Bestandteile getrennt wird. Während das Abgas über die Leitung (6a) abfließt, werden die Feststoffteilchen über die Leitung (11) der Leitung (12a) zugeführt, in der sie im Abgasstrom suspendiert werden, der aus dem Drehrohrofen (13) in die Leitung (12a) gelangt. Die Feststoffsuspension tritt über die Leitung (12b) in den Zyklon (14) ein, wo die Trennung der Feststoffsuspension erfolgt. Während das Abgas über die Leitung (9a) abfließt, gelangen die im Zyklon (14) abgeschiedenen Feststoffe über die Leitung (15) in den Drehrohrofen (13), wo sie langsam der Flamme entgegenfließen, die durch den Brenner (16) erzeugt wird. Der Zementklinker wird aus dem Drehrohrofen über die Leitung (17) entnommen. Das Zementrohmehl hat in der Leitung (15) in der Regel eine Temperatur von 800 bis 900°C, während in der Leitung (12a) eine Abgastemperatur von ca. 1100 bis 1200°C herrscht. Auf dem Weg durch die einzelnen Zyklone des Vorwärmers kühlt sich das Abgas ab, und die Wärmeenergie wird vom Zementrohmehl aufgenommen.

Das Abgas tritt in die Leitung (3a) mit einer Temperatur von ca. 500 bis 600°C ein und kühlt sich in der Leitung (3b) sowie im Zyklon (4) auf eine Temperatur von 300 bis 400°C ab. Aus dem Zyklon (4) tritt das Abgas zur Feinentstaubung über die Leitung (18) in einen Elektrofilter ein, der in der Zeichnung nicht dargestellt ist.

Aus dem Vorratsbunker (19) wird Eisensulfat mit einer Teilchengröße von 50 bis 100 µm über die Leitung (20) in die Leitung (3a) gefördert, wobei dem Abgas pro Nm³ ca. 2 g Eisensulfat (berechnet als FeSO₄) zugegeben werden. Das Eisensulfat vermischt sich mit dem Zementrohmehl, das im Abgasstrom in einer Menge von ca. 750 g/Nm³ vorhanden ist.

In den Teil der Leitung (12b), in dem eine Temperatur von 800 bis 900°C herrscht, wird aus dem Tank (21) über die Leitung (22) NH₃ eingebracht. Das NH₃ kann entweder gasförmig oder in Form einer wäßrigen Lösung zugegeben werden. Die eingesetzte NH₃-Menge ist von der im Abgas vorhandenen Stickoxidmenge anhängig, die ständig analysiert und als NO berechnet wird. Pro Mol NO wird dem Abgas 0,9 Mol NH₃ zugesetzt. In der Leitung (12b) und im Zyklon (14) erfolgt die Reduktion der Stickoxide unter Bildung von H₂O und N₂, wobei der Entstickungsgrad etwa 50 % beträgt. Im Abgas, das den Zyklon (14) über die Leitung (9a) verläßt, sind also noch 0,45 Mol NH₃ enthalten. Eine Adsorption des NH₃ durch das Zementrohmehl wurde auf dem Weg zur Leitung (3a) nicht beobachtet. Das im Abgas vorhandene NH₃ wird während des Weges durch die Leitungen (9a), (9b), (6a), (6b), (3a) und (3b) sowie durch die Zyklone (14), (10) und (7) sehr gleichmäßig mit dem Abgas vermischt, so daß die durch das FeSO₄ katalysierte Entstickungsreaktion mit hoher Ausbeute abläuft. In den Leitungen (3a) und (3b) sowie im Zyklon (4) erfolgt die Umsetzung des noch im Abgas enthaltenen NH₃ mit den im Abgas enthaltenen Stickoxiden durch die mittels FeSO₄ katalysierte Entstickungsreaktion unter Bildung von H₂O und N₂. Die Entstickungsreaktion läuft hinsichtlich des Verbrauchs an NH₃ nahezu quantitativ ab, so daß in der Leitung (18) kein NH₃-Gehalt auftrat. Das in der Leitung (3a) im Abgasstrom vorhandene NH₃ (0,45 Mol) wurde also vollständig zur Reduktion der Stickoxide verbraucht, so daß der NOₓ-Gehalt des in der Leitung (18) geführten Abgases nur noch 0,1 Mol betrug. Insgesamt konnte also ein Entstickungsgrad von 90 % erreicht werden, wobei ein NH₃-Schlupf sicher vermieden wurde und wobei der katalytischen Entstickungsstufe kein NH₃ zugeführt werden mußte. In den Leitungen (3a) und (3b) sowie im Zyklon (4) herrschte eine Temperatur von 350 bis 400°C.

In Figur 2 ist die Variante des erfindungsgemäßen Verfahrens dargestellt, in welcher der Zyklon (4) durch eine Wirbelschicht (4') ersetzt ist, die im einzelnen aus dem Wirbelschichtreaktor (23), dem als Zyklon gestalteten Abscheider (24) sowie der Feststoffleitung (25) besteht. Die Prozeßapparate der Wirbelschicht (4') sind - wie nachfolgend beschrieben - in das Gesamtverfahren integriert.

In der Leitung (3b) wird der aus dem Zyklon (7) kommende Abgasstrom geführt, in dem das Zementrohmehl suspendiert ist. Diese Gas-Feststoff-Suspension wird in den Wirbelschichtreaktor (23) eingetragen, in dem sich der Entstickungskatalysator befindet, der einen Teilchendurchmesser von 1 bis 3 mm hat. Der Katalysator wird im Wirbelschichtreaktor (23) fluidisiert und in einen Wirbelzustand versetzt, wobei der Katalysator teilweise durch mechanischen Abrieb zerkleinert wird. Der feinteilige Katalysatorabrieb wird zusammen mit dem Zementrohmehl vom Abgasstrom aus dem Wirbelschichtreaktor (23) über die Leitung (28) in den Abscheider (24) gefördert, der als ein- oder mehrstufiger Zyklon ausgebildet ist. Im Abscheider (24) erfolgt die Trennung von Abgas und Feststoff. Während das Abgas über die Leitung (18) abfließt, gelangt der aus Zementrohmehl und Katalysatorabrieb bestehende feinteilige Feststoff über die Feststoffleitung (25) in die Leitung (5). Der durch Abrieb entstehende Katalysatorverlust wird dadurch ausgeglichen, daß dem Wirbelschichtreaktor (23) aus dem Vorratsbunker (27) über die Leitung (26) neuer Katalysator zugeführt wird. Da die Teilchen des Zementrohmehls und des Katalysatorabriebs sehr klein sind und die Katalysatorteilchen einen vergleichsweise großen Durchmesser haben, verbleibt der Katalysator im Wirbelschichtreaktor (23) und wird nicht vom Abgas ausgetragen.

Für den Fall, daß im Abgasstrom, der in der Leitung (3a) geführt wird, noch SO₂ enthalten ist, wird ein Teilstrom des in der Leitung (15) geführten, teilweise calcinierten Zementrohmehls über die Leitung (29) in die Leitung (3a) eingebracht und in dem dort geführten Abgasstrom suspendiert. Diese Variante ist sowohl für den in Figur 1 als auch für den in Figur 2 dargestellten Verfahrensablauf anwendbar. Es ist auch möglich, den in der Leitung (29) geführten Teilstrom des teilweise calcinierten Zementrohmehls durch eine bezüglich des CaO-Gehalts des Zementrohmehls äquivalente Menge Ca(OH)₂ zu ersetzen. Die Dosiervorrichtung für das Ca(OH)₂ ist in der Zeichnung nicht dargestellt.

Der Gegenstand der Erfindung wird nachfolgend anhand eines weiteren Ausführungsbeispiels näher erläutert.

In einer Anlage zur Herstellung von Zement mit einer Kapazität von 75 t Zement/h fallen pro Stunde 120 000 Nm³ Abgas an, die durchschnittlich 1200 mg NOₓ/Nm³, berechnet als NO, und 1800 mg SO₂/Nm³ enthielten. Das entspricht einem NO-Ausstoß von 144 kg/h und einem SO₂-Ausstoß von 216 kg/h. Die Anlage hat den in Figur 1 dargestellten Aufbau, wobei aber der Zyklon (4) gemäß Figur 2 durch die Wirbelschicht (4') ersetzt wurde. 74,5 kg NH₃ wurden pro Stunde in die Leitung (12b) an der Stelle eingebracht, an der eine Temperatur von 900°C herrschte. Das Molverhältnis NO : NH₃ betrug also 1 : 0,91. Der Katalysatorverbrauch betrug 42 kg/h, d.h., diese Katalysatormenge wurde dem Wirbelschichtreaktor (23) aus dem Vorratsbunker (27) über die Leitung (26) stündlich zugeführt. Das gereinigte Abgas hatte einen NOₓ-Gehalt, berechnet als NO, von < 200 mg/Nm³, was einer Reinigungsleistung von 83 % entspricht. Über die Leitung (29) wurden pro Stunde 446 kg Ca(OH)₂ in die Leitung (3a) eingebracht. Dies entspricht einem Molverhältnis von Ca(OH)₂ : SO₂ = 1,78 : 1. Das gereinigte Abgas hatte einen SO₂-Gehalt von < 400 mg/Nm³, was einer Reinigungsleistung von 78 % entspricht. Der Katalysatorabrieb sowie die aus dem Ca(OH)₂ und dem SO₂ gebildeten Reaktionsprodukte konnten im Zement verbleiben, da sie dessen Qualität nicht nachteilig beeinflußten.

## Patentansprüche

1. Verfahren zur Entstickung der bei der Herstellung von Zement anfallenden Abgase, dadurch gekennzeichnet, daß dem Abgas nach Verlassen des Drehrohrofens bei einer Temperatur von 750 bis 950°C Ammoniak zugegeben wird, wobei das Verhältnis NOₓ : NH₃ = 1 : 0,8 bis 1 : 1 beträgt, und daß das Abgas bei einer Temperatur von 300 bis 450°C mit einem Katalysator in Kontakt gebracht wird, der als aktive Substanz Eisensulfat oder eine Mischung aus Eisensulfat und Mangansulfat enthält.

2. Verfahren nach Anbruch 1, dadurch gekennzeichnet, daß dem Abgas bei einer Temperatur von 800 bis 900°C Ammoniak zugegeben wird und daß das Abgas bei einer Temperatur von 350 bis 400°C mit dem Katalysator in Kontakt gebracht wird.

3. Verfahren nach den Ansprüchen 1 bis 2, dadurch gekennzeichnet, daß als Katalysator kristallines Eisensulfat oder eine Mischung aus kristallinem Eisensulfat und kristallinem Mangansulfat verwendet wird, wobei der Katalysator eine Teilchengröße von 50 bis 500 µm hat und im Abgasstrom vor dem obersten Zyklon des Vorwärmers verteilt wird.

4. Verfahren nach Anspruch 3, dadurch gekennzeichnet, daß der Katalysator dem Abgas in einer Menge von 0,1 bis 3 g/Nm³ zugegeben wird.

5. Verfahren nach den Ansprüchen 3 bis 4, dadurch gekennzeichnet, daß Eisensulfat und Mangansulfat (berechnet als FeSO₄ und MnSO₄) im Gewichtsverhältnis 3 : 1 bis 5 : 1 gemischt sind.

6. Verfahren nach den Ansprüchen 1 bis 2, dadurch gekennzeichnet, daß der Katalysator in einer Wirbelschicht mit dem Abgas in Kontakt gebracht wird, daß die Wirbelschicht den obersten Zyklon des Vorwärmers ersetzt und daß die katalytisch aktive Substanz des Katalysators auf einem Träger aufgebracht wird, wobei der Träger einen Teilchendurchmesser von 0,5 bis 5 mm hat und aus SiO₂, Al₂O₃ oder Alumosilikaten besteht.

7. Verfahren nach den Ansprüchen 1 bis 6, dadurch gekennzeichnet, daß dem Abgas vor dem Eintritt in den obersten Zyklon des Vorwärmers oder in die Wirbelschicht des Vorwärmers teilweise calciniertes Rohmehl zugeführt wird.

## Claims

1. A process for removing nitrogen oxides from exhaust gases resulting from the manufacture of cement, characterized in that ammonia is added to the exhaust gas when the same has left the rotary-tube furnace at a temperature of 750 to 950°C, where the ratio of NOₓ:NH₃ = 1:0.8 to 1:1, and that the exhaust gas is brought in contact with a catalyst at a temperature of 300 to 450°C, which catalyst contains iron sulfate or a mixture of iron sulfate and manganese sulfate as active substance.

2. The process as claimed in claim 1, characterized in that ammonia is added to the exhaust gas at a temperature of 800 to 900°C, and that the exhaust gas is brought in contact with the catalyst at a temperature of 350 to 400°C.

3. The process as claimed in claims 1 to 2, characterized in that crystalline iron sulfate or a mixture of crystalline iron sulfate and crystalline manganese sulfate is used as catalyst, where the catalyst has a particle size of 50 to 500 µm and is distributed in the exhaust gas stream before the uppermost cyclone of the preheater.

4. The process as claimed in claim 3, characterized in that the catalyst is added to the exhaust gas in an amount of 0.1 to 3 g/Nm³.

5. The process as claimed in claims 3 to 4, characterized in that iron sulfate and manganese sulfate (calculated as FeSO₄ and MnSO₄) are mixed in a weight ratio of 3:1 to 5:1.

6. The process as claimed in claims 1 to 2, characterized in that the catalyst is brought in contact with the exhaust gas in a fluidized bed, that the fluidized bed replaces the uppermost cyclone of the preheater, and that the catalytically active substance of the catalyst is applied on a substrate, where the substrate has a particle diameter of 0.5 to 5 mm and consists of SiO₂, Al₂O₃ or alumosilicates.

7. The process as claimed in claims 1 to 6, characterized in that before entrance into the uppermost cyclone of the preheater or into the fluidized bed of the preheater, partially calcined raw meal is supplied to the exhaust gas.

## Revendications

1. Procédé d'élimination d'oxyde d'azote des effluents gazeux se produisant lors de la fabrication du ciment, caractérisé en ce qu'il consiste à ajouter à l'effluent gazeux après qu'il a quitté le four tubulaire rotatif à une température de 750 à 950°C de l'ammoniac, le rapport NOₓ : NH₃ étant compris entre 1 : 0,8 et 1 : 1 et à mettre l'effluent gazeux en contact à une température de 300 à 450°C avec un catalyseur qui renferme comme substance active du sulfate de fer ou un mélange de sulfate de fer et de sulfate de manganèse.

2. Procédé suivant la revendication 1, caractérisé en ce qu'il consiste à ajouter à l'effluent gazeux à une température de 800 à 900°C de l'ammoniac et à mettre l'effluent gazeux à une température de 350 à 400°C en contact avec le catalyseur.

3. Procédé suivant la revendication 1 ou 2, caractérisé en ce qu'il consiste à utiliser comme catalyseur du sulfate de fer cristallin ou un mélange de sulfate de fer cristallin et de sulfate de manganèse cristallin, le catalyseur ayant une granulométrie de 50 à 500 µm et étant répartit dans le courant d'effluent gazeux en amont du cyclone le plus haut du préchauffeur.

4. Procédé suivant la revendication 3, caractérisé en ce qu'il consiste à ajouter le catalyseur à l'effluent gazeux en une quantité de 0,1 à 3 g/m³ normal.

5. Procédé suivant la revendication 3 ou 4, caractérisé en ce qu'il consiste à mélanger le sulfate de fer et le sulfate de manganèse (exprimés en FeSO₄ et MnSO₄) en un rapport pondéral de 3 : 1 à 5 : 1.

6. Procédé suivant la revendication 1 ou 2, caractérisé en ce qu'il consiste à mettre le catalyseur en contact avec l'effluent gazeux dans un lit fluidisé, ce lit fluidisé remplaçant le cyclone le plus haut du préchauffeur et à mettre la substance active catalytiquement du catalyseur sur un support, le support ayant un diamètre de particule de 0,5 à 5 mm et étant en SiO₂, en AL₂O₃ ou en aluminosilicates.

7. Procédé suivant l'une des revendications 1 à 6, caractérisé en ce qu'il consiste à envoyer à l'effluent gazeux avant l'entrée dans le cyclone le plus haut du préchauffeur ou dans le lit fluidisé du préchauffeur de la farine crue partiellement calcinée.
